# EUROPÄISCHE PATENTSCHRIFT

(11) **EP 1 177 120 B1**
(45) Veröffentlichungstag und Bekanntmachung des Hinweises auf die Patenterteilung: **21.12.2005**
(21) Anmeldenummer: 00988562.5
(22) Anmeldetag: 08.11.2000
(51) Int. Cl.: B60S 1/34, B60S 1/04

(54) **SCHEIBENWISCHER**
WIPER BLADE
ESSUIE-GLACE

(30) Priorität: 11.11.1999 DE 19954147
(43) Veröffentlichungstag der Anmeldung: 06.02.2002
(73) Patentinhaber: ROBERT BOSCH GMBH, 70442 Stuttgart (DE); Volkswagen AG, 38436 Wolfsburg (DE)
(72) Erfinder: LEUTSCH, Wolfgang, 77830 Buehlertal (DE); BOOS, Tino, 76532 Baden-Baden (DE); OSTROWSKI, Wolfgang, 38446 Wolfsburg (DE)
(86) Internationale Anmeldenummer: PCT/DE2000/003909
(87) Internationale Veröffentlichungsnummer: WO 2001/034441

(56) Entgegenhaltungen:
- DE-A- 4 235 395
- FR-A- 2 750 662
- US-A- 5 339 489

## Beschreibung

### Stand der Technik

Die Erfindung geht von einem Scheibenwischer nach dem Oberbegriff des Anspruchs 1 aus. Ein derartiger Scheibenwischer ist aus der DE-A-4 028 494 bekannt.

Bekannte Scheibenwischer besitzen einen Wischarm, der aus einem Befestigungsteil und einem über ein Abklappgelenk daran angelenkten Gelenkteil mit einer Wischstange aufgebaut ist. Das Befestigungsteil sitzt auf einer Antriebswelle, die in einem Lagergehäuse gelagert ist und den Wischarm im wesentlichen parallel zu einer Fahrzeugscheibe schwenkt. An einem freien Ende der Wischstange ist ein Wischblatt angelenkt. Das Wischblatt besitzt ein in der Regel mehrgliederiges Tragbügelsystem mit an einem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Fahrzeugscheibe anpaßt. Zu diesem Zweck spannt eine Zugfeder das Abklappgelenk vor. Solche Scheibenwischer sind z.B. aus der DE-A-37 44 237 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Aus der DE-A-16 80 194 ist eine Wischvorrichtung für Scheiben von Fahrzeugen bekannt, bei der ein Wischarm beim Einschwenken in einer Parkstellung über eine Hubvorrichtung liegt, die durch einen federbeaufschlagten Stößel gebildet ist und beim Ausfahren den Wischarm mit dem Wischblatt von der Fahrzeugscheibe abhebt. Der Stößel wird zurückgezogen und das Wischblatt wieder auf die Fahrzeugscheibe abgelegt, indem ein steuerbarer Elektromagnet aktiviert wird. Sollte die Stößelbetätigung ausfallen, so würde der Stößel in der ausgefahrenen Position bleiben. In dieser Lage liegt er aber im Bewegungsbereich des Wischarms, wodurch Beschädigungen des Scheibenwischers möglich sind.

Aus der DE-C-42 02 965 ist ein Scheibenwischer für Kraftfahrzeugscheiben bekannt, dessen Wischarm in einer Parkstellung durch eine Hubvorrichtung anhebt und dabei das Wischblatt von der Fahrzeugscheibe abhebt. Die Hubvorrichtung umfaßt einen Hubarm, der außerhalb des vom Wischarm und Wischblatt überstrichenen Bereichs abgestützt ist und in seiner Arbeitsstellung eine Hubhöhe aufweist, die - bezogen auf einen Überdeckungsbereich zum Wischarm - einer den Scheibenwischer in dessen Wischstellung mit Freigang übergreifenden Stellung des Hubarms entspricht. Dadurch wird vermieden, daß bei einem Defekt der Hubvorrichtung die Bewegung des Wischarms mit dem Hubarm kollidiert und die Wischervorrichtung beschädigt wird.

Aus der DE-A-32 28 087 ist eine Wischanlage für Kraftfahrzeugscheiben bekannt, bei der der Anpreßdruck des Wischarms durch den axialen Hub eines Stößels verstellt werden kann. Der Stößel greift an einem zweiarmigen Hebel an, der entlang der Wischarmlängsrichtung angeordnet ist. Dadurch wird das Wischblatt in der Parkstellung des Scheibenwischers druckentlastet und die Wischlippe vor bleibender Verformung geschützt.

Ferner ist aus der DE-A-40 28 494 ein Scheibenwischer für Kraftfahrzeuge bekannt, bei dem die Anpreßkraft des Wischarms bei einer Bewegungsumkehr reduziert wird, um Geräusche zu vermeiden. Hierzu ist auf einem Gelenkbolzen des Abklappgelenks ein Schwinghebel gelagert, der an einem Ende eines Hebelarms eine Einhängevorrichtung für die Zugfeder trägt und am Ende des anderen Hebelarms eine Rolle aufweist, die auf einer am Lagergehäuse angebrachten Rampe läuft. Über die Rampe und den Schwinghebel wird die Einhängevorrichtung in Abhängigkeit von der Drehstellung des Wischarms so verlagert, daß die Anpreßkraft des Wischarms in den Umkehrlagen des Scheibenwischers reduziert ist.

### Vorteile der Erfindung

Nach der Erfindung abstützt sich die Zugfeder mit ihrem zweiten Ende am Befestigungsteil ab und der Schwinghebel hebt mittels seines anderen Endes das Gelenkteil mit einem Wischblatt in einer Parkposition vollständig von einer Fahrzeugscheibe ab. Dadurch wird mit einfachen und betriebssicheren Mitteln sichergestellt, daß das Wischblatt in der Parkposition von der Fahrzeugscheibe abgehoben wird. Die Wischlippe des Wischblatts ist völlig entlastet, wenn der Scheibenwischer abgestellt ist, so daß sie nicht auf Dauer bleibend verformt wird, wodurch die Wischqualität beeinträchtigt wird. Ferner wird verhindert, daß die Wischlippe bei Frost an der Fahrzeugscheibe festfriert und beim Losreißen beschädigt wird.

Die Rampe selbst ist ein einfaches Bauteil, das zweckmäßigerweise integraler Bestandteil der Reinigungsanlage ist und vorzugsweise am Lagergehäuse des Scheibenwischers befestigt ist.

Der Schwinghebel kann in einem eigenen Schwinglager am Befestigungsteil gelagert sein. In einfacher Weise wird er jedoch vorteilhaft auf einer Gelenkachse des Abklappgelenks gelagert. Um die Reibung zwischen der Rampe und dem Schwinghebel zu verringern, ist an dem der Rampe zugeordneten Ende des Schwinghebels eine Rolle vorgesehen.

Da der Wischarm nicht notwendigerweise jedesmal an der Fahrzeugscheibe abgehoben zu werden braucht, wenn er die Parklage erreicht, sondern nur dann, wenn der Scheibenwischer abgestellt wird, ist die Lösung besonders vorteilhaft bei Wischeranlagen mit einer erweiterten Parkstellung, die nur angefahren wird, wenn der Scheibenwischer abgestellt wird. In diesem Fall wird die Rampe auf die Wischeranlage so abgestimmt, daß im erweiterten Wischwinkelbereich der Parklage der Schwinghebel das Gelenkteil mit dem Wischblatt von der Fahrzeugscheibe abhebt.

In der Regel befindet sich das Wischblatt in der Parkstellung in einer sogenannten Haubenspalte zwischen der Motorhaube und einer Windschutzscheibe des Kraftfahrzeugs. Da die Haubenspalte bei verschiedenen Fahrzeugtypen unterschiedlich weit ist, ist es zweckmäßig, daß die Abhebehöhe des Wischblatts von der Fahrzeugscheibe einstellbar ist. Dies kann z.B. dadurch geschehen, daß der Winkel des Schwinghebels, den seine Enden einschließen, einstellbar ist, z.B. durch Biegen oder Paßstücke, die auf die Enden des Schwinghebels gesetzt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

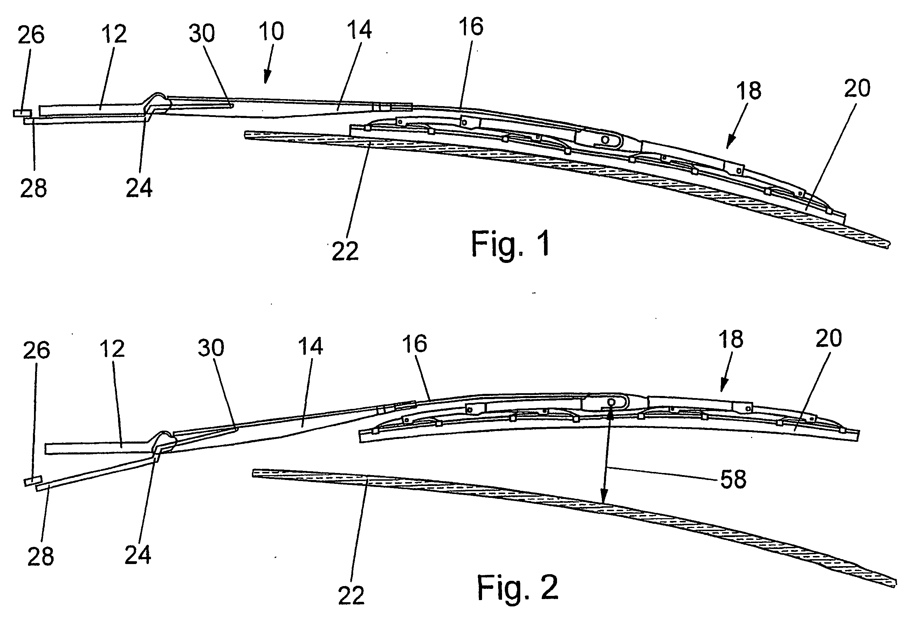

- Fig. 1: eine vereinfachte Ansicht eines Scheibenwischers,
- Fig. 2: einen Scheibenwischer nach Fig. 1 in einer von einer Fahrzeugscheibe abgehobenen Position und

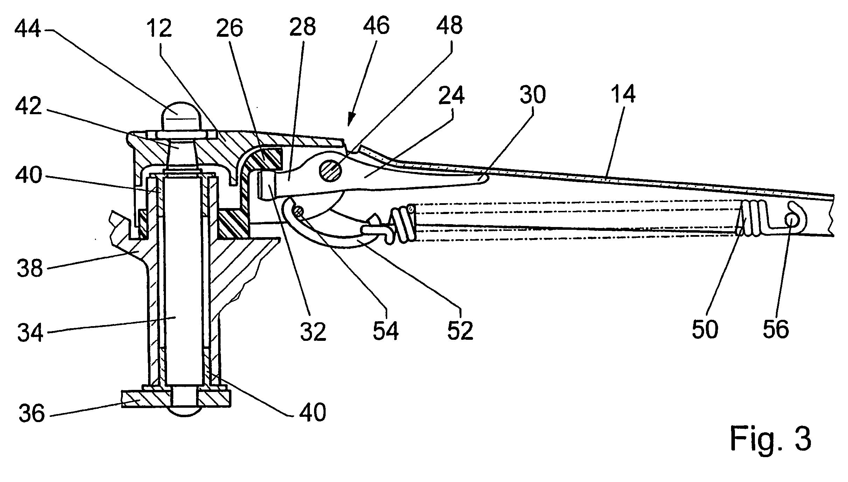

- Fig. 3: einen teilweisen Längsschnitt durch einen Scheibenwischer im Bereich eines Wischerlagers.

### Beschreibung der Ausführungsbeispiele

Der erfindungsgemäße Scheibenwischer besitzt einen Wischarm 10, der aus einem Befestigungsteil 12 und einem daran über ein Abklappgelenk 46 angelenkten Gelenkteil 14 mit einer Wischstange 16 aufgebaut ist. An der Wischstange 16 ist ein Wischblatt 18 angelenkt, dessen Wischleiste 20 zum Reinigen einer Fahrzeugscheibe 22 mit einem Anpreßdruck auf die Fahrzeugscheibe 22 gedrückt wird.

Der Anpreßdruck wird von einer Zugfeder 50 erzeugt, die einerseits mit einem Ende in einer Einhängevorrichtung 56 des Gelenkteils 14 eingehängt ist und andererseits mit dem anderen Ende über einen C-Bügel 52 in einer Einhängevorrichtung 54 des Befestigungsteils 12 eingehängt ist und somit das Abklappgelenkt 46 vorspannt.

Eine Antriebswelle 34, die in einem Lagergehäuse 38 mittels Lagerbuchsen 40 an ihren Enden gelagert ist, wird von einer Kurbel 36 an einem Ende angetrieben und treibt ihrerseits an ihrem anderen Ende das Befestigungsteil 12 an, das auf einem Klemmkonus 42 mittels einer Schraube 44 gehalten wird.

Auf einer Gelenkachse 48 des Abklappgelenks 46 ist ein Schwinghebel 24 gelagert, der mit einem Ende 30 an der inneren Seite des Gelenkteils 14 anliegt und dessen anderes Ende 28 eine Rolle 32 trägt, die an einer Rampe 26 läuft. Die Rampe 26, die zweckmäßigerweise aus einem Kunststoff hergestellt ist, ist fest mit dem Lagergehäuse 38 verbunden. Sie kann auch integraler Bestandteil des Lagergehäuses 38 sein, wodurch die Teilevielfalt reduziert wird.

Die Rampe 26 steuert die Bewegung des Schwinghebels 24 in der Weise, daß dieser in der Parkstellung des Wischarms 10 das Gelenkteil 14 mittels seines Endes 30 anhebt. Dabei wird die Abhebehöhe 58 von der Fahrzeugscheibe 22 so gewählt, daß das Wischblatt 18 einerseits einen ausreichenden Abstand von der Fahrzeugscheibe 22 hat, aber andererseits eine Kollision mit benachbarten Fahrzeugteilen, z.B. einer nicht näher dargestellten Motorhaube vermieden wird. Bei Wischeranlagen mit einer erweiterten Parkstellung, die nur beim Abschalten des Scheibenwischers erreicht wird, ist die Rampe 26 so ausgelegt, daß der Schwinghebel 24 das Wischblatt 18 nur in der erweiterten Parkstellung anhebt.

### Bezugszeichen

- 10: Wischarm
- 12: Befestigungsteil
- 14: Gelenkteil
- 16: Wischstange
- 18: Wischblatt
- 20: Wischleiste
- 22: Fahrzeugscheibe
- 24: Schwinghebel
- 26: Rampe
- 28: Ende
- 30: Ende
- 32: Rolle
- 34: Antriebswelle
- 36: Kurbel
- 38: Lagergehäuse
- 40: Lagerbuchse
- 42: Klemmkonus
- 44: Schraube
- 46: Abklappgelenk
- 48: Gelenkachse
- 50: Zugfeder
- 52: C-Bügel
- 54: Einhängevorrichtung
- 56: Einhängevorrichtung
- 58: Abhebehöhe

## Patentansprüche

1. Scheibenwischer mit einem Wischarm (10), dessen Befestigungsteil (12) auf einer in einem Lagergehäuse (38) gelagerten Antriebswelle (34) sitzt und über ein Abklappgelenk (46) mit einem Gelenkteil (14) mit einer Wischstange (16) verbunden ist, wobei mindestens eine Zugfeder (50), die sich mit einem ersten Ende am Gelenkteil (14) abstützt, das Abklappgelenk (46) vorspannt und eine Stellvorrichtung mit einem Schwinghebel (24) vorgesehen ist, der in einem Schwinglager (46) am Befestigungsteil (12) gelagert ist und durch eine am Fahrzeug befestigte Rampe (26) am zugeordneten Ende (28) gesteuert wird, **dadurch gekennzeichnet, dass** die Zugfeder (50) sich mit ihrem zweiten Ende am Befestigungsteil (12) abstützt und der Schwinghebel (24) mittels seines anderen Endes (30) das Gelenkteil (14) mit einem Wischblatt (18) in einer Parkposition vollständig von einer Fahrzeugscheibe (22) abhebt.

2. Scheibenwischer nach Anspruch 1, **dadurch gekennzeichnet, dass** eine Gelenkachse (48) des Abklappgelenks (46) zur Lagerung des Schwinghebels (24) dient.

3. Scheibenwischer nach einem der vorhergehenden Ansprüche, **dadurch gekennzeichnet, daß** die Rampe (26) Bestandteil der Reinigungsanlage ist.

4. Scheibenwischer nach Anspruch 3, **dadurch gekennzeichnet, daß** die Rampe (26) am Lagergehäuse (38) befestigt ist.

5. Scheibenwischer nach einem der vorhergehenden Ansprüche, **dadurch gekennzeichnet, daß** der Verlauf der Rampe (26) auf eine Wischeranlage mit einer erweiterten Parkstellung abgestimmt ist, so daß im erweiterten Wischwinkelbereich der Parklage, welcher nur beim Abschalten des Scheibenwischers erreicht wird, der Schwinghebel (24) das Gelenkteil (14) mit dem Wischblatt (18) von der Fahrzeugscheibe (22) abhebt.

6. Scheibenwischer nach einem der vorhergehenden Ansprüche, **dadurch gekennzeichnet, daß** die Abhebehöhe (58) des Wischblatts (18) von der Fahrzeugscheibe (22) einstellbar ist.

7. Scheibenwischer nach Anspruch 6, **dadurch gekennzeichnet, daß** die Abhebehöhe (58) des Wischblatts (18) über den Winkel des Schwinghebels (24), den die Enden (28, 30) einschließen, einstellbar ist.

## Claims

1. Wiper with a wiper arm (10), the fastening part (12) of which sits on a drive shaft (34), which is mounted in a bearing housing (38), and is connected by an articulated part (14) to a wiper rod (16) via a fold-down joint (46), at least one tension spring (50), which is supported at a first end on the articulated part (14), prestressing the fold-down joint (46), and an adjusting device being provided with an oscillating lever (24) which is mounted in an oscillating bearing (46) on the fastening part (12) and is controlled at the associated end (28) by a ramp (26) fastened to the vehicle, **characterized in that** the tension spring (50) is supported at its second end on the fastening part (12), and the oscillating lever (24), by means of its other end (30), completely raises the articulated part (14) with a wiper blade (18) from a vehicle window (22) in a parking position.

2. Wiper according to Claim 1, **characterized in that** an axis of articulation (48) of the fold-down joint (46) serves for the mounting of the oscillating lever (24).

3. Wiper according to one of the preceding claims, **characterized in that** the ramp (26) is part of the cleaning system.

4. Wiper according to Claim 3, **characterized in that** the ramp (26) is fastened to the bearing housing (38).

5. Wiper according to one of the preceding claims, **characterized in that** the profile of the ramp (26) is matched to a wiper system having an expanded parking position, with the result that, in the expanded wiper angle region of the parking position, which is only reached when the wiper is switched off, the oscillating lever (24) raises the articulated part (14) with the wiper blade (18) from the vehicle window (22).

6. Wiper according to one of the preceding claims, **characterized in that** the raising height (58) of the wiper blade (18) from the vehicle window (22) can be adjusted.

7. Wiper according to Claim 6, **characterized in that** the raising height (58) of the wiper blade (18) can be adjusted via the angle of the oscillating lever (24) enclosed by the ends (28, 30).

## Revendications

1. Essuie-glace comportant un bras (10) dont la pièce de fixation (12) est montée sur un arbre d'entraînement (34) logé dans un boîtier de palier (38) en étant reliée par une articulation de rabattement (46) à la pièce d'articulation (14) de la tige d'essuie-glace (16),
au moins un ressort de traction (50) s'appuyant par une première extrémité contre la pièce d'articulation (14) assure la précontrainte de l'articulation de rabattement (46) et
un dispositif de réglage comporte un levier oscillant (24) monté à la pièce de fixation (12) par un palier oscillant (46) et commandé par une rampe (26) fixée au véhicule au niveau de l'extrémité associée (28) du levier,
**caractérisé en ce que**
le ressort de traction (50) s'appuie par sa seconde extrémité à la pièce de fixation (12) et en position de rangement, le levier oscillant (24) soulève complètement la pièce d'articulation (14) et le balai d'essuie-glace (18) du pare brise (22) par son autre extrémité (30).

2. Essuie-glace selon la revendication 1,
**caractérisé en ce que**
l'axe d'articulation (48) du levier de rabattement (46) sert de palier au levier oscillant (24).

3. Essuie-glace selon l'une des revendications précédentes,
**caractérisé en ce que**
la rampe (26) fait partie de l'installation de nettoyage.

4. Essuie-glace selon la revendication 3,
**caractérisé en ce que**
la rampe (26) est fixée au boîtier de palier (38).

5. Essuie-glace selon l'une quelconque des revendications précédentes,
**caractérisé en ce que**
le profil de la rampe (28) est défini pour une installation d'essuyage avec une position de rangement étendue de façon que dans la plage d'angle d'essuyage, étendue de la position de rangement dans laquelle on arrive seulement lorsque l'essuie-glace est coupé, le levier oscillant (24) soulève la pièce d'articulation (14) et le balai d'essuie-glace (18) par rapport à la vitre (22) du véhicule.

6. Essuie-glace selon l'une des revendications précédentes,
**caractérisé en ce que**
la hauteur de soulèvement (58) du balai d'essuie-glace (18) par rapport à la vitre (22) du véhicule est réglable.

7. Essuie-glace selon la revendication 6,
**caractérisé en ce que**
la hauteur de soulèvement (58) du balai d'essuie-glace (18) est réglable sur l'angle du levier oscillant (24) défini entre les extrémités (28, 30).
